# EUROPEAN PATENT APPLICATION

(11) **EP 4 614 684 A1**
(43) Date of publication of application: **10.09.2025**
(21) Application number: 24212257.0
(22) Date of filing: 12.11.2024
(51) Int. Cl.: H01M 50/103, H01M 50/15, H01M 50/112, H01M 50/474, H01M 50/528

(54) **COVER PLATE ASSEMBLY AND BATTERY**

(30) Priority: 07.03.2024 CN 202420447242 U; 25.04.2024 WO PCT/CN2024/089729
(71) Applicant: HUIZHOU EVE POWER CO., LTD, Huizhou, Guangdong 516039 (CN); Eve Power Co., Ltd., Jingmen, Hubei 448000 (CN)
(72) Inventor: AN, Suli, Huizhou, 516039 (CN); SHU, Kuanjin, Huizhou, 516039 (CN); DUAN, Dong, Huizhou, 516039 (CN); LIU, Ziwen, Huizhou, 516039 (CN); ZHENG, Xu, Huizhou, 516039 (CN); LIN, Zhibing, Huizhou, 516039 (CN)
(74) Representative: Berggren Oy

(57) **Abstract**

A cover plate assembly (13) and a battery (100) are disclosed. The cover plate assembly (13) includes a cover plate (1), a pole (2) and a connecting sheet (3). The pole (2) is mounted on the cover plate (1). The connecting sheet (3) includes a pole connecting portion (31) and a tab connecting portion (32), and the pole connecting portion (31) is connected to the pole (2). A first insulating member (4) is provided between the pole connecting portion (31) and the cover plate (1), the first insulating member (4) is provided with a hook portion (41) and the pole connecting portion (31) is clamped with the hook portion (41). A crack preventing notch (33) is provided on a position of the pole connecting portion (31) close to the tab connecting portion (32).

## Description

### TECHNICAL FIELD

The present application relates to the field of batteries, for example, to a cover plate assembly and a battery.

### BACKGROUND

In related art, a battery mainly includes a case and a core disposed in the case. The case has a shell with an opening and a cover plate covering the opening. A pole is provided on the cover plate, and a tab of the core is electrically connected to the pole through a connecting sheet in L-shape. The connecting sheet is generally a plate-like structure formed by bending, and has a thin thickness and poor strength. However, the battery is easily subjected to mechanical vibration and shock during use, which causes deformation and fracture to the connecting sheet. For example, in a case that the battery is applied to a vehicle, the vibration and shock to the vehicle during driving easily causes deformation to the connecting sheet, and even fracture at a stress concentration part (a bending part of the connecting sheet) of a pin, to cause failure of the battery.

### SUMMARY

The present application provides a cover plate assembly capable of improving anti-vibration and anti-shock of a connecting sheet and reducing the risk of deformation and fracture of the connecting sheet.

The present application provides a battery in which a connecting sheet is not easily broken, has good service performance, and has a long service life.

According to a first aspect, embodiments of the present application provide a cover plate assembly including a cover plate, a pole, and a connecting sheet, where the pole is mounted on the cover plate, the connecting sheet includes a pole connecting portion and a tab connecting portion, the pole connecting portion and the tab connecting portion are connected at an included angle, and the pole connecting portion is connected to the pole; where a first insulating member is provided between the pole connecting portion and the cover plate, the first insulating member is provided with a hook portion, and the pole connecting portion is clamped with the hook portion; and where a crack preventing notch is provided on a position of the pole connecting portion close to the tab connecting portion.

In some embodiments, the first insulating member is provided with a limiting portion, the limiting portion matches a contour of the crack preventing notch, and the limiting portion is inserted into the crack preventing notch.

In some embodiments, a transition portion is provided between the tab connecting portion and the pole connecting portion, and a length of the tab connecting portion in a first direction is greater than a length of the transition portion in the first direction.

In some embodiments, the pole connecting portion is provided with a pole hole connected to the pole, and the tab connecting portion is provided with an extending portion protruded from a side of the tab connecting portion away from the pole hole and in the first direction.

In some embodiments, a width of the transition portion is gradually increased from an end close to the pole connecting portion to an end close to the tab connecting portion.

In some embodiments, the tab connecting portion is provided with a thinning portion at a position close to the pole connecting portion, and a cross-sectional size of the thinning portion in a second direction is less than a cross-sectional size of a portion of the tab connecting portion other than the thinning portion in the second direction.

In some embodiments, a limiting groove is recessed in a side of the first insulating member away from the cover plate, a hook portion is provided on a wall of the limiting groove close to an opening of the limiting groove, and the pole connecting portion is provided in the limiting groove and is clamped with the hook portion; and/or, the limiting portion is provided on the wall of the limiting groove close to the opening of the limiting groove, and the limiting portion is inserted into the crack preventing notch.

In some embodiments, one of the first insulating member and the pole connecting portion is provided with a positioning hole, another of the first insulating member and the pole connecting portion is provided with a positioning post, and the positioning post is inserted in the positioning hole.

In some embodiments, a distance between an abutment face of the hook portion against pole connecting portion and a bottom of the limiting groove of the first insulating member notched is L, and a thickness of the pole connecting portion is H, where H and L are satisfied with: L-H>0.1mm; and/or, a wall of the crack preventing notch is spaced from the limiting portion, and a gap between the wall of the crack preventing notch and the limiting portion is greater than 0.1 mm.

In some embodiments, the tab connecting portion includes a first side and a second side opposite in a first direction, the tab connecting portion is provided with a slot extending through the first side and the second side, and the slot is configured to be in an insertion engagement with a tab of a core.

According to a second aspect, embodiments of the present application provide a battery including a case provided with an opening, a core mounted in the case, and a cover plate assembly as described above, where the cover plate assembly covers the opening, and the cover plate assembly is connected to a tab of the core through the pole connecting portion of the connecting sheet.

Advantageous effects of the present application are as follows.

Before the pole and the connecting sheet are connected, the pole connecting portion may be pre-fixed to the edge of the first insulating member by the hook portion to reduce the difficulty of welding the pole and the pole connecting portion. After the connection, the hook portion may serve as a limiting support for the connecting sheet to prevent the connecting sheet from moving in the vertical direction under the action of the external force. As such, the anti-shock and anti-vibration capability of the connecting sheet is improved, and the connecting sheet is not easily deformed. By providing the crack preventing notch at the junction of the pole connecting portion and the tab connecting portion, the stress at the junction of the pole connecting portion and the tab connecting portion is advantageously relieved, and the stress concentration at the junction is avoided, thereby improving the tearing resistance at the junction and reducing the risk of fracture at the junction due to external force.

### BRIEF DESCRIPTION OF THE DRAWINGS

FIG. 1 is an exploded view of a cover plate assembly according to some embodiments of the present application.
FIG. 2 is a schematic structural diagram of a cover plate assembly according to some embodiments of the present application.
FIG. 3 is a cross-sectional view of a cover plate assembly according to some embodiments of the present application.
FIG. 4 is an enlarged view of part A in FIG. 3.
FIG. 5 is an exploded view of a connecting sheet and a first insulating member according to some embodiments of the present application.
FIG. 6 is a second side view of a first insulating member according to some embodiments of the present application.
FIG. 7 is a first side view of a first insulating member according to some embodiments of the present application.
FIG. 8 is a schematic structural diagram of a battery according to some embodiments of the present application.

### Reference Numerals:

1. cover plate; 11. third projection; 2. pole; 3. connecting sheet; 31. pole connecting portion; 32. tab connecting portion; 321. thinning portion; 322, extending portion; 323. first side; 324. second side; 325. slot; 33. crack preventing notch; 34. transition portion; 4. first insulating member; 41. hook portion; 42. limiting portion; 43. limiting groove; 44. release hole; 45. first projection; 5. positioning hole; 6. positioning post; 7. second insulating member; 71. second projection; 8. fixing block; 9. seal ring; 100. battery; 10. case; 12. core; and 13. cover plate assembly.

### DETAILED DESCRIPTION OF THE EMBODIMENTS

In the description of the present application, unless otherwise expressly defined and defined, the terms "link", "connect", "fix" are to be understood in a broad sense, for example, as a fixed connection, as a detachable connection, or as being connected in a whole. The terms may represent a mechanical connection or an electrical connection. The terms may indicate that the elements may be directly connected or indirectly connected by means of an intermediate medium, and may be internal communication or interaction. The specific meaning of the above terms in the present application may be understood by one of ordinary skill in the art as the case may be.

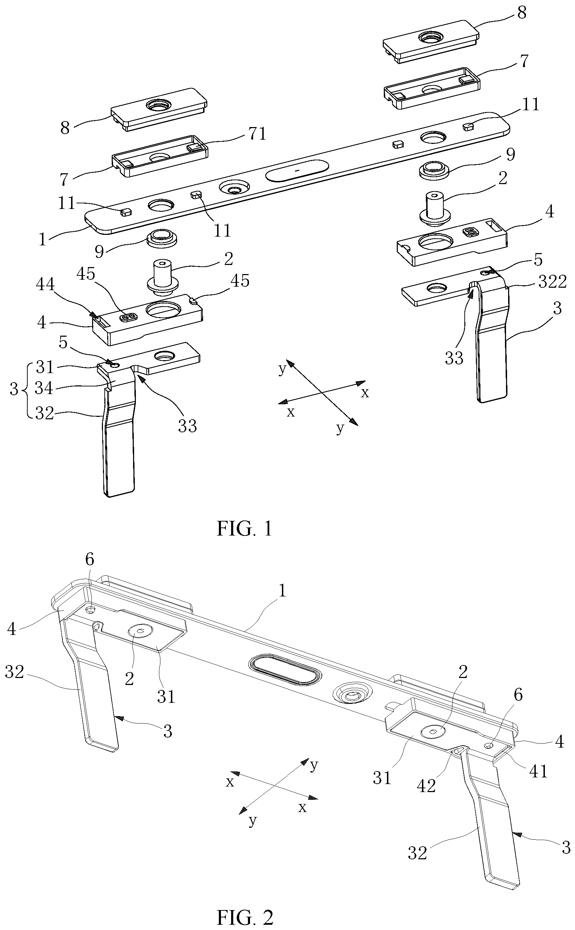

As shown in FIG. 1 to FIG. 5, a cover plate assembly according to the present application includes a cover plate 1, a pole 2, and a connecting sheet 3. The pole 2 is mounted with the cover plate 1, the connecting sheet 3 includes a pole connecting portion 31 and a tab connecting portion 32, and the pole connecting portion 31 and the tab connecting portion 32 are connected at an included angle. The pole connecting portion 31 is connected to the pole 2, and a first insulating member 4 is provided between the pole connecting portion 31 and the cover plate 1. The first insulating member 4 is provided with a hook portion 41, and the pole connecting portion 31 is clamped with the hook portion 41. A crack preventing notch 33 is provided at a position of the pole connecting portion 31 close to the tab connecting portion 32.

It should be understood that the cover plate 1, the first insulating member 4 and the connecting sheet 3 are arranged from top to bottom, and the pole 2 extends through the cover plate 1 and the first insulating member 4, and is welded to the pole connecting portion 31 of the connecting sheet 3. Before welding, the pole connecting portion 31 may be pre-fixed to the edge of the first insulating member 4 by the hook portion 41 to reduce the difficulty of welding the pole 2 and the pole connecting portion 31. After welding, the hook portion 41 may serve as a limiting support for the connecting sheet 3 to prevent the connecting sheet 3 from moving in the vertical direction under the action of the external force. As such, the anti-shock and anti-vibration capability of the connecting sheet 3 is improved, and the connecting sheet 3 is not easily deformed. By providing the crack preventing notch 33 at the junction of the pole connecting portion 31 and the tab connecting portion 32, the stress at the junction of the pole connecting portion 31 and the tab connecting portion 32 is advantageously relieved, and the stress concentration at the junction is avoided, thereby improving the tearing resistance at the junction and reducing the risk of fracture at the junction due to external force.

The hook portions 41 may be provided with one or more, and the number of the hook portions 41 is not specifically limited herein.

By providing the crack preventing notch 33, a space is provided for deformation or shaking to the tab connecting portion 32, so that the tab connecting portion 32 is easily deformed or shakes toward the crack preventing notch 33 under the action of an external force, thereby causing the tab connecting portion 32 to break. The first insulating member 4 is provided with a limiting portion 42, and the limiting portion 42 matches the contour of the crack preventing notch 33 and is inserted into the crack preventing notch 33. In a case that the pole connecting portion 31 is mounted to the first insulating member 4, the limiting portion 42 can be inserted into the crack preventing notch 33 to block and limit the tab connecting portion 32 to reduce the deformation to the tab connecting portion 32. As such, the tab connecting portion 32 is not easily deformed, thereby further reducing the risk of deformation and fracture of the connecting sheet 3.

Here, the crack preventing notch 33 may be in a V-shape, a U-shape, a rectangular shape, an arc-shaped, or other special-shape. In the present embodiment, the crack preventing notch 33 is in a V-shape, and the V-shaped notch can increase the curvature radius of the junction of the tab connecting portion 32 and the pole connecting portion 31 to effectively release stress accumulated during shock and vibration.

The limiting portion 42 and the crack preventing notch 33 are spaced with each other to provide a gap for the tab connecting portion 32 as a certain deformation space. It should be understood that, if the deformation to the tab connecting portion 32 is large, fracture of the tab connecting portion 32 can easily occur, and if the movement of the tab connecting portion 32 is completely restricted, the stress at the junction of the pole connecting portion 31 and the tab connecting portion 32 can be concentrated, which causes the connecting sheet 3 to be excessively rigid, and causes fracture of the connecting sheet 3. By spacing the limiting portion 42 and the crack preventing notch 33, a space can be reserved for the elastic deformation to the tab connecting portion 32 to release stress, and the limiting portion 42 can block and limit the tab connecting portion 32 to avoid the fracture to the tab connecting portion 32 due to excessive deformation.

In a case that the gap between the limiting portion 42 and the crack preventing notch 33 is too small, the space for the deformation to the tab connecting portion 32 is insufficient, and the connecting sheet 3 is too rigid. In a case that the gap between the limiting portion 42 and the crack preventing notch 33 is too large, the tab connecting portion 32 is easily to be broken due to large deformation. In some embodiments, the gap between the limiting portion 42 and the side wall of the crack preventing notch 33 is greater than 0.1 mm, and optionally, the gap between the limiting portion 42 and the side wall of the crack preventing notch 33 may be 0.1 mm, 0.15mm, 0.2 mm, 0.25 mm, 0.3 mm, or the like.

In some embodiments, an elastic gasket (not shown) is provided in the gap between the limiting portion 42 and the crack preventing notch 33, so that the tab connecting portion 32 elastically abuts against the limiting portion 42, thereby dampening the tab connecting portion 32 and reducing the fracture of the connecting sheet 3.

The first insulating member 4 is provided with a limiting groove 43, and the limiting groove 43 is recessed in the side wall of the first insulating member 4 away from the cover plate 1. The hook portion 41 is provided at the wall of the limiting groove 43 close to the opening of the limiting groove 43, and the pole connecting portion 31 is provided in the limiting groove 43 and is clamped with the hook portion 41 to prevent the pole connecting portion 31 from falling off. The pole connecting portion 31 is received by the limiting groove 43, as such, the pole connecting portion 31 is limited to be rotated in the circumferential direction of the pole 2. Meanwhile, the limiting pole connecting portion 31 is limited to be moved in the vertical direction by the hook portion 41. Thus, the limiting groove 43 and the hook portion 41 together limit the connecting sheet 3 to ensure the connecting sheet 3 more stable and reliable.

In order to facilitate to mount the pole connecting portion 31 in the limiting groove 43 and clamp the pole connecting portion 31 with the hook portion 41, the distance between the abutment surface of the hook portion 41 against the pole connecting portion 31 and the bottom of the limiting groove 43 of the first insulating member 4 is L, and the thickness of the pole connecting portion 31 is H, where L is greater than H.

In a case that a value of L-H is too large, the volume of the first insulating member 4 is large, thereby increasing the occupied space of the battery case. In a case that a value of L-H is too small, the difficulty of mounting the connecting sheet 3 with the first insulating member 4 is increased. In some embodiments, the value of L-H satisfies with: L-H >0.1mm, optionally, the value of L-H may be 0.1 mm, 0.15mm, 0.2 mm, 0.25 mm, 0.3 mm, or the like.

The limiting portion 42 is provided at the wall of the limiting groove 43 close to the opening, and the limiting portion 42 is located at a position of the first insulating member 4 corresponding to the crack preventing notch 33. The limiting portion 42 is inserted into the crack preventing notch 33, and cooperates with the crack preventing notch 33, to prevent not only deformation and fracture of the connecting sheet 3, but also to position the connecting sheet 3 and the first insulating member 4.

In some embodiments, the cross-sectional size of the limiting groove 43 is greater than the cross-sectional size of the pole connecting portion 31, so that the pole connecting portion 31 is in clearance fit with the limiting groove 43, thereby facilitating to mount the pole connecting portion 31 in the limiting groove 43.

The pole connecting portion 31 is provided with a pole hole, the first insulating member 4 is provided with a first opening, and the cover plate 1 is provided with a second opening. An end of the pole 2 is inserted into the pole hole through the first opening and the second opening to weld with the pole hole. The tab connecting portion 32 is connected to an edge region of the pole connecting portion 31 away from the pole hole, to increase the spacing between the tab connecting portion 32 and the pole hole, to reduce the impact torque applied to the junction of the pole connecting portion 31 and the tab connecting portion 32, thereby further improving the anti-shock and anti-vibration effect of the junction.

In some embodiments, one of the first insulating member 4 and the pole connecting portion 31 is provided with a positioning hole 5, and the other of the first insulating member 4 and the pole connecting portion 31 is provided with a positioning post 6, and the positioning post 6 is inserted into the positioning hole 5. Illustratively, in connection with FIG. 1, FIG. 2 and FIG. 5, the positioning post 6 is protruded from the bottom of the limiting groove 43, the pole connecting portion 31 is provided with a positioning hole 5, and the positioning post 6 is in insertion engagement with the positioning hole 5, to position the mounting pole connecting portion 31 to ensure that the pole hole on the pole connecting portion 31 is aligned with the first opening and the second opening. In addition, the insertion engagement of the positioning post 6 with the positioning hole 5 can also limit the movement of the connecting sheet 3 in the horizontal direction, thereby improving the anti-shock and anti-vibration capability of the connecting sheet 3.

In some embodiments, the cover plate 1 is provided with a first groove, the first insulating member 4 is provided with a first projection 45, and the first groove is in insertion engagement with the first projection 45, to limit the relative twisting of the first insulating member 4 and the cover plate 1. In other embodiments, the cover plate 1 may also be provided with a projection, and the first insulating member 4 is provided with a groove to realize the projection in insertion engagement with the groove.

In some embodiments, the connecting sheet 3 may be integrally bent from a sheet to form the pole connecting portion 31 and the tab connecting portion 32 to improve the overall strength of the connecting sheet 3.

In some embodiments, a transition portion 34 is provided between the tab connecting portion 32 and the pole connecting portion 31, and the length of the tab connecting portion 32 in the first direction (x direction in figures) is greater than the length of the transition portion 34 in the first direction. As such, the area of the tab connecting portion 32 is increased, to provide a greater area for welding the tab connecting portion 32 with the tab, thereby improving the welding effect and the connection stability of the tab connecting portion 32 and the tab. In addition, the length of the transition portion 34 in the first direction is small, that is, the connection area between the transition portion 34 and the pole connecting portion 31 is small, so that the transition portion 34 is more easily elastically deformed by an external force to release stress and to avoid the stress concentration at the bending position of the connecting sheet 3.

In some embodiments, an extending portion 322 is protruded on the side of the tab connecting portion 32 away from the pole hole and in the first direction, and the first direction is the same as the direction the tab extending out of the core. It should be understood that, since the pole connecting portion 31 is mounted in the limiting groove 43 of the first insulating member 4, if the tab connecting portion 32 protrudes from the wall of the limiting groove 43 away from the pole hole, the interference is generated between the tab connecting portion 32 and the wall of the limiting groove 43. By providing the extending portion 322, the tab connecting portion 32 is widened toward the extension direction of the tab, so that the length of the tab connecting portion 32 in the first direction is greater than the length of the transition portion 34 in the first direction, thereby increasing the welding area of the tab connecting portion 32. At the same time, the connecting sheet 3 is provided with a notch at the transition portion 34 to keep clear from the first insulating member 4. As such, the tab connecting portion 32 is spaced below the limiting groove 43, to widened tab connecting portion 32 to smoothly connect with the tab.

In some embodiments, the limiting groove 43 has an outer wall in the first direction and relatively away from the pole hole, and the outer wall is flush with the side of the extending portion 322 in the first direction and away from the pole hole. In a case that the length of the extending portion 322 in the first direction is too large, the space occupied by the connecting sheet 3 in the battery case is increased, and the energy density of the battery is reduced. In a case that the length of the extending portion 322 in the first direction is too small, the welding effect of the tab connecting portion 32 and the tab is reduced. By widening the extending portion 322 by using the space in the battery case below the outer wall, the space utilization rate in the battery case is improved, which does not need to be widened by reducing the size of the core. Therefore, the welding effect of the connecting sheet 3 and the tab can be improved without affecting the battery density.

In some embodiments, the tab connecting portion 32 includes a first side 323 and a second side 324 opposite in the first direction, the tab connecting portion 32 is provided with a slot 325 extending through the first side 323 and the second side 324, and the slot 325 is configured to be in an insertion engagement with the tab. With this design, it is possible to insert the tab into the slot 325 for pre-fixing, and then to weld and fix the tab, so that both sides of the slot 325 in the second direction (y direction in the figures) can contact and weld with both sides of the tab in the second direction, respectively. As such, the connection area between the tab connecting portion 32 and the tab is increased, to provide a more effective welding and more stable fixing between the tab connecting portion 32 and the tab.

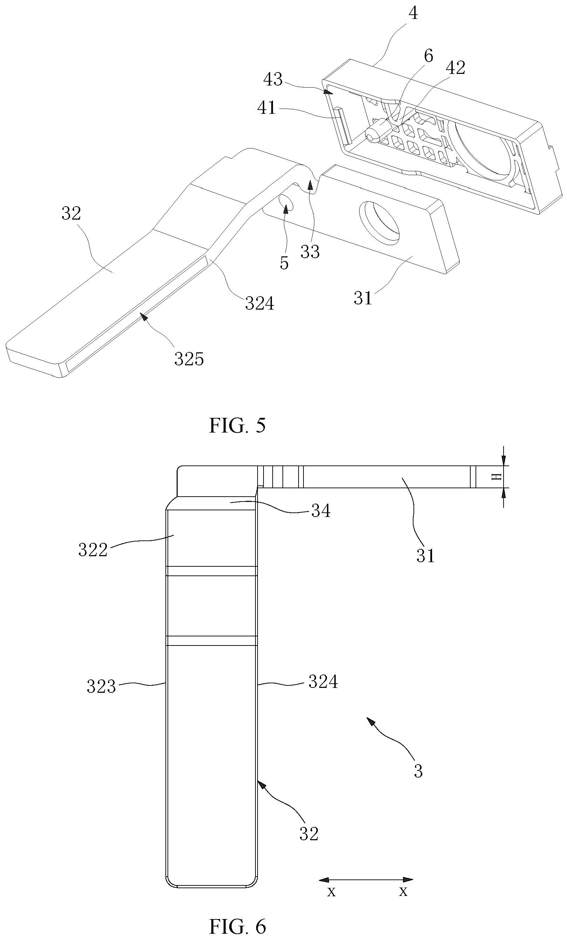

In some embodiments, referring to FIG. 6, the width of the transition portion 34 is gradually increased from an end close to the pole connecting portion 31 toward an end close to the tab connecting portion 32. By this design, the stress at the bending position of the connecting sheet 3 can be gradually changed through the transition portion 34 and transmitted to the tab connecting portion 32, to avoid damage caused by the stress mutation.

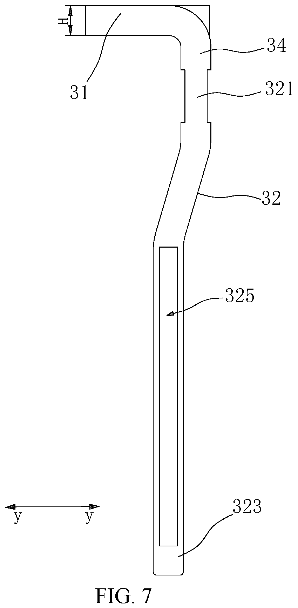

In some embodiments, referring to FIG. 7, the tab connecting portion 32 is provided with a thinning portion 321 at a position close to the pole connecting portion 31, and a cross-sectional size of the thinning portion 321 in the second direction is less than a cross-sectional size of a portion of the tab connecting portion 32 other than the thinning portion 321 in the second direction. In the present embodiment, a thickness of the thinning portion 321 is less than a thickness of the tab connecting portion 32. In a case that the connecting sheet 3 is subjected to an external force, the thinning portion 321 having a relatively thin thickness is more likely to be flexibly deformed to prevent the connecting sheet 3 from being broken due to an excessive external force. Meanwhile, the thinning portion 321 has a larger resistance, and can serve as an over-current protection structure to prevent thermal runaway of the battery.

The first insulating member 4 may be a molded plastic member integrally injected. The first insulating member 4 is provided with a release hole 44 at a position corresponding to the hook portion 41. It should be understood that an insert is used in injection molding for ease of molding, and the insert is an irregular molded fitting embedded in the mold to function to fill the space between the masks. At the time of injection molding, the release hole 44 is formed to allow the insert to penetrate into, that is, the insert can be filled into the mold for forming the hook portion 41. The insert is located outside the mold, after the injection molding, the insert can be quickly removed from the release hole 44 to facilitate demold.

The cover plate assembly further includes a second insulating member 7 provided on a side of the cover plate 1 away from the first insulating member 4, and a fixing block 8 is provided on a side of the second insulating member 7 away from the cover plate 1. The second insulating member 7 is provided with a third opening, the fixing block 8 is provided with a riveting hole, and an end of the pole 2 away from the connecting sheet 3 sequentially extends through the first opening, the second opening, the third opening and the riveting hole and is riveted.

In some embodiments, referring to FIG. 1, FIG. 3 and FIG. 4, the second insulating member 7 is provided with a second projection 71, the fixing block 8 is provided with a second groove, and the second groove is in an insertion engagement with the second projection 71 to limit the relative twisting of the second insulating member 7 and the fixing block 8, thereby improving the stability of the pole 2.

The cover plate 1 is provided with a third projection 11, the second insulating member 7 is provided with a third groove, and the third groove is in an insertion engagement with the third projection 11 to limit the relative twisting of the second insulating member 7 and the cover plate 1, thereby further improving the stability of the pole 2.

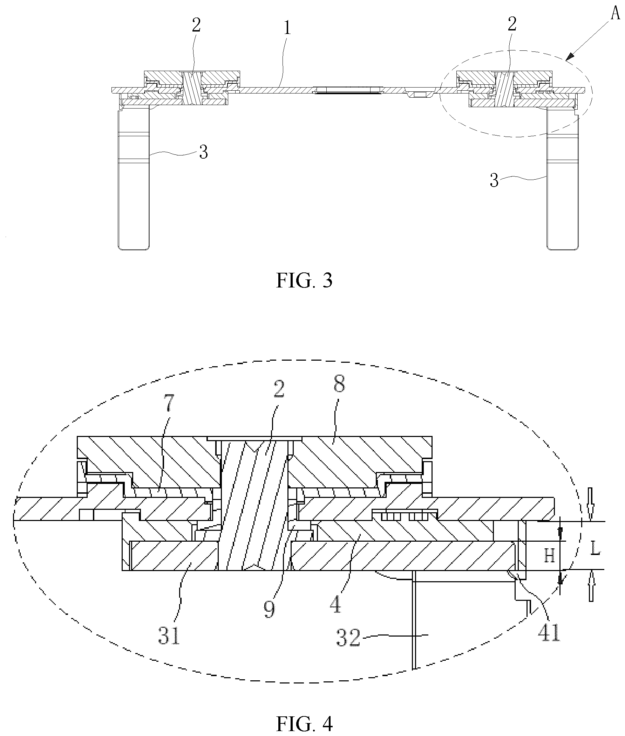

Referring to FIG. 1 and FIG. 4, the cover plate assembly further includes a seal ring 9, and the seal ring 9 is sleeved around the periphery of the pole 2. Further, the seal ring fills the gap between the third opening and the pole 2, and is disposed between the bottom of the cover plate 1 and the boss on the periphery of the pole 2, to ensure the sealing performance of the cover plate assembly.

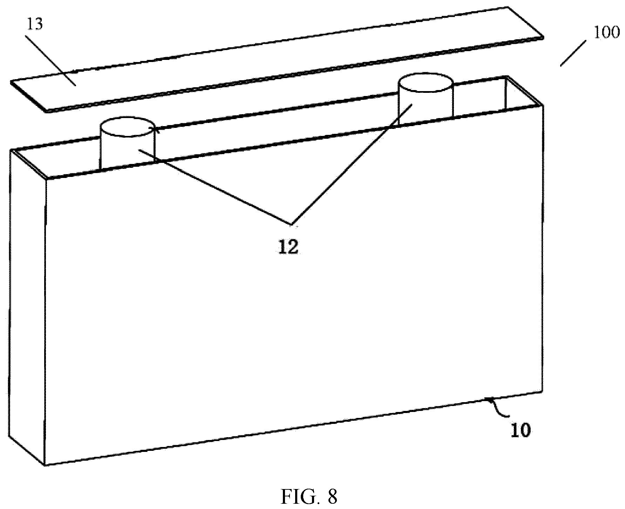

As shown in FIG. 8, the present application further provides a battery 100 including a case 10 provided with an opening, a core 12 mounted in the case, and a cover plate assembly 13 according to any one of the above embodiments. The cover plate assembly is covered on the opening, and the cover plate assembly is connected to the tab of the core through the tab connecting portion 32 of the connecting sheet 3. According to the battery of the present application, by using the cover plate assembly described in any one of the above embodiments, the battery is not liable to fail due to deformation and fracture of the connecting sheet 3, and the battery is better in service performance and longer in service life.

In the description herein, the orientation or positional relationship of the terms "upper", "lower", "left", "right", and the like are based on the orientation or positional relationship shown in the accompanying drawings, merely for ease of description and simplicity of operation, and do not indicate or imply that the devices or elements referred to must have a particular orientation, be constructed and operated in a particular orientation, and therefore are not to be construed as limiting the application. Furthermore, the terms "first" and "second" are used solely for the purpose of distinguishing between description and not in a particular sense.

In the description of this specification, a description with reference to the terms "an embodiment", "an example", and the like, means that a particular feature, structure, material, or characteristic described in connection with the embodiment or example is included in at least one embodiment or example of the present application. In the present specification, the schematic representation of the above terms does not necessarily refer to the same embodiments or examples.

In addition, it should be understood that while the specification has been described in terms of embodiments, not every embodiment includes only an independent technical solution, and that the description is presented for the sake of clarity only. Those skilled in the art will recognize the specification as a whole, and that the technical solutions in the various embodiments may be combined as appropriate to form other embodiments as will be understood by those skilled in the art.

## Claims

1. A cover plate assembly (13), **characterized by** comprising a cover plate (1), a pole (2), and a connecting sheet (3), wherein the pole (2) is mounted on the cover plate (1), the connecting sheet (3) includes a pole connecting portion (31) and a tab connecting portion (32), the pole connecting portion (31) and the tab connecting portion (32) are connected at an included angle, and the pole connecting portion (31) is connected to the pole (2); wherein a first insulating member (4) is provided between the pole connecting portion (31) and the cover plate (1), the first insulating member (4) is provided with a hook portion (41), and the pole connecting portion (31) is clamped with the hook portion (41); and wherein a crack preventing notch (33) is provided on a position of the pole connecting portion (31) close to the tab connecting portion (32).

2. The cover plate assembly (13) of claim 1, wherein the first insulating member (4) is provided with a limiting portion (42), the limiting portion (42) matches a contour of the crack preventing notch (33), and the limiting portion (42) is inserted into the crack preventing notch (33).

3. The cover plate assembly (13) of claim 1, wherein a transition portion (34) is provided between the tab connecting portion (32) and the pole connecting portion (31), and a length of the tab connecting portion (32) in a first direction is greater than a length of the transition portion (34) in the first direction.

4. The cover plate assembly (13) of claim 3, wherein the pole connecting portion (31) is provided with a pole hole connected to the pole (2), and the tab connecting portion (32) is provided with an extending portion (322) protruded from a side of the tab connecting portion (32) away from the pole hole and in the first direction.

5. The cover plate assembly (13) of claim 3, wherein a width of the transition portion (34) is gradually increased from an end close to the pole connecting portion (31) to an end close to the tab connecting portion (32).

6. The cover plate assembly (13) of claim 1, wherein the tab connecting portion (32) is provided with a thinning portion (321) at a position close to the pole connecting portion (31), and a cross-sectional size of the thinning portion (321) in a second direction is less than a cross-sectional size of a portion of the tab connecting portion (32) other than the thinning portion (321) in the second direction.

7. The cover plate assembly (13) of claim 2, wherein a limiting groove (43) is recessed in a side of the first insulating member (4) away from the cover plate (1), the hook portion (41) is provided on a wall of the limiting groove (43) close to an opening of the limiting groove (43), and the pole connecting portion (31) is provided in the limiting groove (43) and is clamped with the hook portion (41); and/or, the limiting portion (42) is provided on the wall of the limiting groove (43) close to the opening of the limiting groove (43), and the limiting portion (42) is inserted into the crack preventing notch (33).

8. The cover plate assembly (13) of any one of claims 1 to 7, wherein one of the first insulating member (4) and the pole connecting portion (31) is provided with a positioning hole (5), another of the first insulating member (4) and the pole connecting portion (31) is provided with a positioning post (6), and the positioning post (6) is inserted in the positioning hole (5).

9. The cover plate assembly (13) of any one of claims 2 to 7, wherein a distance between an abutment face of the hook portion (41) against the pole connecting portion (31) and a bottom of the limiting groove (43) of the first insulating member (4) notched is L, and a thickness of the pole connecting portion (31) is H, wherein H and L are satisfied with: L-H > 0.1 mm; and/or, a wall of the crack preventing notch (33) is spaced from the limiting portion (42), and a gap between the wall of the crack preventing notch (33) and the limiting portion (42) is greater than 0.1 mm.

10. The cover plate assembly (13) of any one of claims 1 to 7, wherein the tab connecting portion (32) comprises a first side (323) and a second side (324) opposite in a first direction, the tab connecting portion (32) is provided with a slot (325) extending through the first side (323) and the second side (324), and the slot (325) is configured to be in an insertion engagement with a tab of a core (12).

11. A battery (100), **characterized by** comprising a case provided with an opening, a core (12) mounted in the case, and a cover plate assembly (13) of any one of claims 1 to 10, wherein the cover plate (1) assembly covers the opening, and the cover plate assembly (13) is connected to a tab of the core (12) through the pole connecting portion (31) of the connecting sheet (3).
